# EUROPEAN PATENT APPLICATION

(11) **EP 3 136 310 A1**
(43) Date of publication of application: **01.03.2017**
(21) Application number: 16185609.1
(22) Date of filing: 25.08.2016
(51) Int. Cl.: G06Q 10/02, G06Q 20/36, G06Q 20/32, G06Q 20/38

(54) **AUTOMATIC DIGITAL TICKET SELECTION SYSTEM**

(30) Priority: 27.08.2015 TW 104128075
(71) Applicant: Linctronix Ltd., New Taipei City 22063 (TW)
(72) Inventor: CHEN, Kuei-Han, 22063 New Taipei City (TW)
(74) Representative: Viering, Jentschura & Partner mbB Patent- und Rechtsanwälte

(57) **Abstract**

The present invention relates to a smart ticket automatically matching system, and more particularly, to a system that can automatically match the ticket on the electrical carrier of the user according to different ticket transaction devices, so that the user can automatically process the transaction procedure through the successful matching result or the user is provided to automatically filter out the ticket on the ticket electrical carrier, and is informed of the quantity and kinds of the allowable tickets to process further transaction.

## Description

### BACKGROUND OF THE INVENTION

### 1. Field of the invention

The present invention relates to a smart ticket automatically matching system, and more particularly, to an electrical ticket carrier for automatically identifying the ticket transaction device and filtering out the ticket that is suitable for the ticket transaction device to use according to different ticket transaction devices. By default or users' setting, the electrical ticket carrier can automatically process the ticket transaction procedure according to the result of the filtering or provide the user with the ticket data on the ticket electrical carrier to inform the user of the quantity and kinds of the allowable tickets in the specific ticket transaction device, so that the user can make a further decision according to the data shown on the ticket electrical carrier; for example, beginning/stopping to deliver the ticket.

### 2. Description of the prior art

In view of the current and future trend of the use of the tickets, handheld, wearable, or mobile devices will be able to provide single-sample multiple tickets or multiple-sample multiple tickets containing consumption coupons, personal identification tickets, activity tickets, membership tickets, activity point tickets, access control tickets, etc.

However, the quantity and kinds of the tickets are various, so it is getting difficult and inconvenient for users to search and use the multiple-sample tickets or multiple tickets. For example, when a consumer that has point tickets or consumption coupons of many stores is shopping in a store, the consumer must pick a specific allowable ticket corresponding to the store to complete the transaction. Consumers have to spend considerable time in the selection process of searching and examining the tickets one by one in order to select the specific electrical ticket correctly, and also have to complete the transaction procedure on the ticket transaction device in accordance with certain procedures in order to complete the trade. This complicated procedures cause a lot of inconvenience for consumers, so the willingness of using the tickets is reduced.

Thus it can be seen that the above mentioned conventional technology still has many disadvantages, which is not a good design and needs to be modified.

### SUMMARY OF THE INVENTION

Therefore, the inventor of this case has engaged in manufacturing development and design experience of the related product for many years, on account of the above mentioned objectives, after a detailed design and careful evaluation, a truly practical present invention is finally gained.

An objective of the present invention is to provide a smart ticket automatically matching system comprising an electrical ticket carrier, wherein the electrical ticket carrier can automatically identify the ticket transaction device and filter out the ticket that is suitable for the ticket transaction device to use according to different ticket transaction devices. By default or users' setting, the electrical ticket carrier can automatically process the ticket transaction procedure according to the result of the filtering or provide the users with the quantity and kinds of the allowable tickets that are detected by the ticket electrical carrier, so that the user can make a further decision according to the data shown on the ticket electrical carrier, for example, to begin delivering or stop delivering the ticket.

To achieve the above mentioned objectives, the smart ticket automatically matching system of the present invention mainly comprises: a ticket electrical carrier and a ticket transaction device; wherein the ticket electrical carrier mainly comprises: a wireless device, a processor unit; or further comprises: a ticket data unit, an indicating unit, an input unit, and an internet connection unit; wherein the wireless device has the function of emitting or receiving wireless signal; wherein the processor unit running on the ticket electrical carrier provides identifying the ticket transaction device, and filtering out the procedure logic operation of the ticket that is suitable for the ticket transaction device to use, or the operation that has communication protocols with the ticket transaction device in the ticket transaction procedure; wherein the ticket data unit can store the content and information of the electrical ticket; wherein the indicating unit is the unit that provides visual, auditory or tactile instructions; wherein the input unit is the unit that provides the user to input the control signal through voice, touch, or moving the electrical carrier; wherein the internet connection unit can provide the internet connecting function; wherein the ticket transaction device mainly comprises: a wireless device, a processor unit; or further comprises: a device identification information unit, a geographic location information unit, an indicating unit, an input unit, and an internet connection unit; wherein the wireless device has the function of emitting or receiving wireless signal; and wherein the processor unit running on the ticket electrical carrier provides the operation logic that has communication protocols with the ticket electrical carrier in the ticket transaction procedure or controls the wireless device to deliver the data of the device identification code. The device identification unit is the storing unit that provides the device identification code; wherein the geographic location information unit provides the geographic location information, such as, GPS location information or other similar information that can be used to find a position; wherein the indicating unit is the unit that provides visual, auditory or tactile instructions; wherein the input unit is the unit that provides the user to input the control signal through voice, touch, or vibrating the electrical carrier; and wherein the internet connection unit can provide the internet connecting function. Thereby, the ticket electrical carrier can receive the wireless signal delivered from the ticket transaction device through the wireless device and interpret the data of the identification code delivered from the ticket transaction device through the processor unit of the ticket electrical carrier, and then filter out the ticket that is suitable for the ticket transaction device to use from the data of the ticket in the ticket data unit according to the identification code. When there is suitable ticket, the ticket electrical carrier can process following behaviors including: automatically processing ticket transaction procedure, delivering the data of the ticket to the ticket transaction device through the wireless communication between the ticket electrical carrier and the ticket transaction device, showing the quantity and kinds of the allowable tickets through the indicating unit, and allowing the user to choose and deliver specific ticket or to stop the transaction procedure through the input unit.

Besides, the ticket transaction device can be set to be able to change the identification code in accordance with time or geographic locations, and change the kinds of the electrical tickets that can be accepted to deliver by the ticket transaction device corresponding to changing the device identification code at the same time. As the above mentioned ticket transaction device, the ticket transaction device can be set to acquire the time that provides the processor unit to change the device identification code and the information of the geographic location through the internet connection unit of the ticket transaction device or the geographic location information unit of the ticket transaction device. The processor unit sets the identification code of the ticket transaction device according to the provided variable of the time and the information of the geographic location. The ticket transaction device mentioned above can be set to acquire the remote control command of the internet connection through the internet connection unit of the ticket transaction device, and set the identification code of the ticket transaction device through the remote control command. The ticket transaction device can also be set to provide the information related to the transaction procedure through the indicating unit or let the user be able to intervene in the transaction procedure artificially through the input unit, for example, to confirm whether allowing the transaction procedure. The device identification information unit stores the identification code of the ticket transaction device, and the device identification information unit can still store the information of the identification code of the ticket transaction device when the ticket transaction device powers off, and provide the information of the identification code of the processor unit of the ticket transaction device when power is restored next time.

The advantages and spirits of the invention may be understood by the following recitations together with the appended drawings.

### BRIEF DESCRIPTION OF THE APPENDED DRAWINGS

Some of the embodiments will be described in detail, with reference to the following figures, wherein like designations denote like members, wherein:
FIG. 1 shows a block diagram of the smart ticket automatically matching system of the present invention. The part of solid line block is a necessary unit and the part of dotted line block is an unnecessary unit.
FIG. 2 shows an action flow diagram of the ticket electrical carrier of the smart ticket automatically matching system of the present invention.
FIG. 3 shows an action flow diagram of the ticket transaction device of the smart ticket automatically matching system of the present invention.

### DETAILED DESCRIPTION OF THE INVENTION

A detailed description of the hereinafter described embodiments of the disclosed apparatus and method are presented herein by way of exemplification and not limitation with reference to the Figures. Although certain embodiments are shown and described in detail, it should be understood that various changes and modifications may be made without departing from the scope of the appended claims. The scope of the present invention will in no way be limited to the quantity of constituting components, the materials thereof, the shapes thereof, the relative arrangement thereof, etc., and are disclosed simply as an example of embodiments of the present invention.

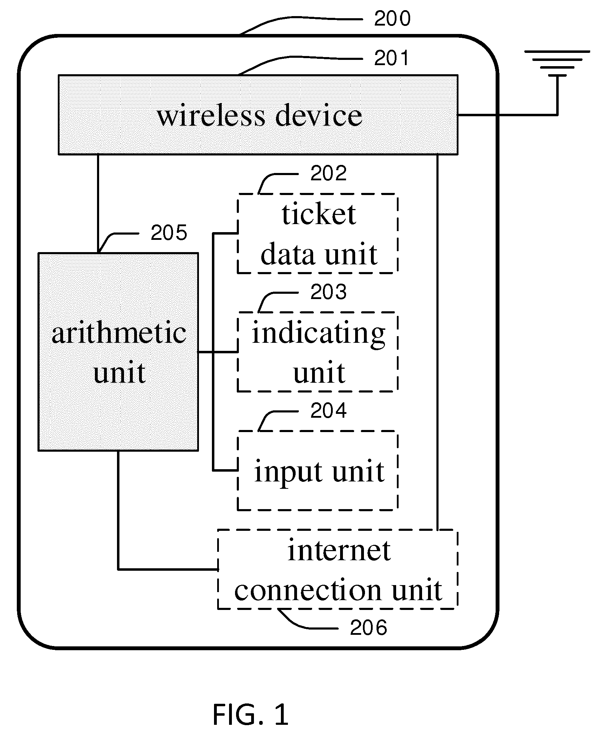

The present invention relates to a smart ticket automatically matching system. Please refer to FIG. 1. The smart ticket automatically matching system of the present invention mainly comprises a ticket electrical carrier 200 and a ticket transaction device 100.

Wherein the ticket electrical carrier 200 mainly comprises a wireless device 201 and a processor unit 205 or can further comprise a ticket data unit 202, an indicating unit 203, an input unit 204, and an internet connection unit 205.

Wherein the wireless device 201 has the function of communicating with other wireless communication devices.

The processor unit 205 provides the procedure logic operation of solvating and matching, or the operation that has communication protocols with the transaction device in the transaction procedure.

The ticket data unit 202 stores the data content of the electrical ticket, and the data unit can be set to be data storage component inside or outside the ticket electrical carrier. The ticket electrical carrier acquires the data of the allowable electrical ticket by the ticket electrical carrier through the internet connection unit or the wireless device.

The indicating unit 203 is the unit that provides visual, auditory or tactile instructions.

The input unit 204 is the unit that provides the user to input the control signal through voice, touch, or wave.

The internet connection unit 206 provides the internet connecting function, so that the ticket electrical carrier can have the internet connecting function.

The ticket transaction device 100 mainly comprises a wireless device 101 and a processor unit 103; or can further comprise a device identification information unit 102, a geographic location information unit 107, an indicating unit 104, an input unit 105, and an internet connection unit 106.

Wherein the wireless device 101 has the function of communicating with other wireless communication devices.

The processor unit 103 provides the operation logic that has communication protocols with the ticket electrical carrier in the transaction procedure, determines whether the content of the delivered ticket is right and matched, or controls the wireless device to deliver the data of the device identification code.

The device identification information unit 102 stores the identification code of the ticket transaction device 100.

The geographic location information unit provides the geographic location information, such as, GPS (Global Position System).

The indicating unit 104 is the unit that provides visual, auditory or tactile instructions.

The internet connection unit 206 provides the internet connecting function, so that the ticket electrical carrier can have the internet connecting function.

By the composition of the above mentioned components, the ticket electrical carrier 200 can receive the data of the wireless communication delivered from the ticket transaction device 100 through the wireless device 201 of the ticket electrical carrier, interpret the data of the device identification code delivered from the ticket transaction device 100, and filter out the ticket that is suitable for the ticket transaction device to use from the ticket data unit 202 according to the identification code. When there is a suitable ticket, the ticket electrical carrier can automatically process a ticket transaction procedure and deliver the allowable ticket to the ticket transaction device or show the allowable ticket through the indicating unit 203 so that the user is informed of the allowable ticket and then confirms the transaction of the ticket or stop the transaction procedure through the input unit. Therefore, the user of the ticket can be guided to automatically complete the transaction procedure, or the user is provided with the allowable ticket only to complete the transaction procedure.

Please refer to FIG. 1 again. The ticket electrical carrier 200 can be a handheld, wearable, or mobile device, such as, a mobile phone, an electrical outfit device (such as iwatch), or a tablet computer. The user stores the electrical ticket in the ticket electrical carrier 200, and can head for the location that can process the ticket transaction to process the ticket transaction through carrying the ticket electrical carrier 200.

Please refer to FIG. 1 again. FIG. 1 shows the wireless device 201, the emission of the wireless device 101, and the received wireless signal; wherein, the transmission technology of wireless communication can be WiFi, Bluetooth, Zigbee communication standard, or other wireless communication standard that can provide information broadcast, reception or two-way communication.

Please refer to FIG. 1 again. The input unit 204 can be a button, a keyboard, a touch screen, a vibration sensor, or a microphone. The input unit 204 can provide the user to intervene in the artificial filtering-matching procedure through the transaction procedure, or determine the result of the transaction procedure artificially.

Please refer to FIG. 1 again. The ticket data unit 202 can be a storing unit, wherein the storing unit can store the data of the electrical ticket.

Please refer to FIG. 1 again. The internet connection unit 206 can provide the internet connecting function or LAN connection, and the internet connection unit can provide the ticket electrical carrier to be enlarged, remotely access the electrical ticket, or download/store the electrical ticket in the ticket data unit 202.

Please refer to FIG. 1 again. The processor unit 205 provides the function of logic operation that is needed for searching the matched electrical ticket according to the device identification code delivered from the ticket transaction device 100.

Please refer to FIG. 1 again. The ticket transaction device 100 can be a general electrical device used for transaction, such as a POS (point of sale), an access control ticket reader, or a parking lot checking gate, and the general electrical device can be set in a general store, an exhibition center, or other places that need the ticket identification.

Please refer to FIG. 1 again. The processor unit 103 provides the necessary operation of the protocols with the ticket electrical carrier in the transaction procedure and provides the ticket transaction device 100 to control the transaction and alteration of the device identification code.

Please refer to FIG. 1 again. The device identification unit 102 can be a data storing unit that can store the device identification code when power is off. When power is restored, the device identification unit can provide the device identification code as the basis of the transaction of the information of the identification code.

Please refer to FIG. 1 again. The geographic location information unit 107 is a unit that can provide the information of the geographic location, such as a GPS (Global Position System). The geographic location information unit can enable the ticket transaction device 100 to change the information of the device identification code according to the change of the geographic location.

Please refer to FIG. 1 again. The internet connection unit 106 can provide the internet connecting function or LAN connection, and the internet connection unit 106 can provide the processor unit 103 to be enlarged to perform the operation resources of the transaction procedure, or the possibility of remote changing the device identification code.

Please refer to FIG. 1 again. The input unit 105 can be a button, a keyboard, a touch screen, a vibration sensor, or a microphone. The input unit 204 can provide the user to intervene in the transaction procedure to achieve artificially determining the result of the transaction procedure, or the possibility of changing the device identification code.

In the present invention, the ticket electrical carrier 200 can be set to receive the wireless signal delivered from the ticket transaction device 100 through the wireless device 201, and the ticket electrical carrier 200 can calculate the distance between the ticket transaction device 100 and the ticket electrical carrier 200 through the strength of the signal. The ticket electrical carrier has to presuppose a specific distance as the starting condition of the ticket filtering procedure and the transaction procedure. As mentioned above, the ticket electrical carrier can also set the corresponding presupposed distance respectively in accordance with different electrical tickets as the starting condition of the ticket filtering procedure and the transaction procedure.

In the another embodiment of the present invention, the ticket transaction device 100 can calculate the distance between the ticket transaction device and the ticket electrical carrier according to the strength of the wireless signal received by the wireless device 101 from the ticket electrical carrier 200. The ticket transaction device 100 can be further set to deliver different device identification codes according to different presupposed distances, and take different scopes for variables to change the kinds of the tickets that are allow to be used and the corresponding transaction procedure within the different scopes.

In the present invention, the ticket transaction device 100 further changes the kinds of the allowable tickets and the transaction procedure through changing the information of the device identification code; the factors that the ticket transaction device uses to change the device identification code include: taking the transaction of the specific ticket for the condition of changing, taking the transaction of the kinds of the specific tickets according to the preset procedure for the condition of changing, taking time for the condition of changing, taking specific time interval for the condition of changing, and taking the geographic location for the condition of changing. Wherein, taking the transaction of the specific tickets and the transaction of the various kinds of the specific tickets according to the preset procedure for the condition can meet the demand of processing the transaction on the specific transaction device through specific sequence according to different electrical tickets. For example, the access control of some specific fields that general/unprofessional people are allowed to visit only when they are accompanied by authorized professionals. In this case, it can be achieved by the changing device identification code; only when the authorized professionals complete the transaction procedure of the access control, then the ticket transaction device 100 changes the device identification code to allow the result of the transaction of the access control ticket of the follow-up unprofessional people. Wherein, taking the geographic location for the condition of changing can meet the demand of providing permission of the transaction of the different electrical tickets because of the different geographic locations of the ticket transaction device 100. For example, because some performance fields sell tickets of different ornamental seats with different prices, the ticket transaction device 100 set up in the entrance to the gateway can provide different device identification codes through setting the specific information of geographic location to achieve the check procedure of different tickets in specific entrance gateway. Wherein, taking time or specific time interval for the condition of changing, the allowable ways of acquiring the current time include the processor unit within the system having the function of time calculation, acquiring from the outside through wireless communication, GPS information or internet connection. As for the time interval, it can be current time and the time when specific command is inputted, the system setting time, the external input time, or the time interval that acquires through other ways. Taking current time or time interval for the condition of changing can meet the demand of providing the check of different electrical tickets at different points in time; for example, the admission ticket of the cinema can check the time that consumers can enter to watch the movie through setting different screening times.

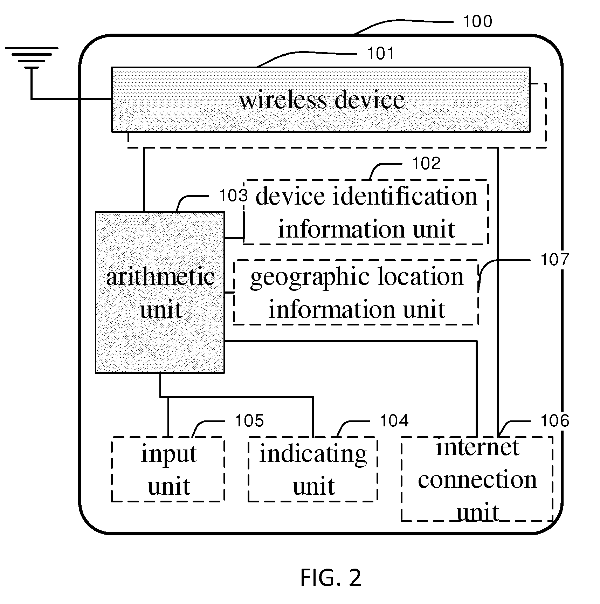

In another embodiment of the present invention, please refer to FIG. 2; the ticket electrical carrier 200 processes in accordance with the following steps when used:
(201) First, the ticket electrical carrier 200 starts the wireless device to receive a wireless signal. When the ticket electrical carrier enters the transmission range of the wireless signal of the ticket transaction device 100;
(202) the ticket electrical carrier 200 interprets the data of the identification code delivered from the ticket transaction device 100 through the wireless device 201 of the ticket electrical carrier;
(203) the processor unit 205 of the ticket electrical carrier searches for matching ticket through the device identification code;
(204) confirm whether there is matching ticket or not. If so, continue the step (205); otherwise, process the step (201) again;
(205) confirm whether there are a plurality of matching tickets or not. If so, continue the step (206); otherwise, process the step (208);
(206) provide the user to choose the allowable electrical ticket on the ticket transaction device 100 through the indicating unit 203 on the ticket electrical carrier;
(207) confirm whether the user chooses the ticket to process transaction or not. If so, process the step (211); otherwise, return to the step (201);
(208) confirm whether the automatically transaction is permissible or not. If so, process the step (211); otherwise, process the step (209);
(209) instruct the user to confirm the electrical ticket to process the transaction procedure through the indicating unit 203 on the ticket electrical carrier;
(210) confirm whether the user chooses to process the transaction or not. If so, process the step (211); otherwise, return to the step (201) again;
(210) the ticket electrical carrier 200 establishes wireless signal communication through the wireless device 201 and the ticket transaction device 100;
(212) the ticket electrical carrier 200 exchanges the information of the electrical ticket with the ticket transaction device 100 and exchanges the result of the verification;
(212) the ticket electrical carrier 200 provides the user with the result of the transaction through the indicating unit 203.

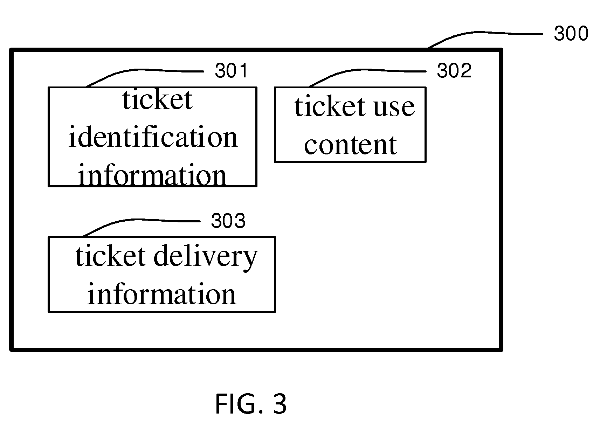

Please refer to FIG. 3; the ticket transaction device 100 processes in accordance with the following steps when used:
(101) First, the ticket transaction device 100 starts the wireless device to deliver the device identification code of the ticket transaction device; wherein, when the ticket electrical carrier proposes the requirement of wireless communication connection, then process the step (102); when the geographic location changes, then process the step (202); when the remote control requires to change the device identification code, then process the step (204);
(102) receive the requirement of wireless communication delivered from the ticket electrical carrier 100, and process the step (103);
(103) acquire the strength of wireless signal through the wireless device 101 of the ticket transaction device 100 and confirm whether it is an effective range of the transaction distance. If so, continue the step (104); otherwise, process the step (109);
(104) wait for the ticket electrical carrier 200 to exchange the information of the electrical ticket; when the information of the electrical ticket is acquired, then process the step (105);
(105) verify the effectiveness of the ticket through the processor unit 103 of the ticket electrical carrier 200 and acquire the result of the verification;
(106) confirm whether there is necessary to change the device identification code (when the ticket transaction device 100 has the function of changing the device identification code due to the transaction sequence). If so, continue the step (107); otherwise, process the step (108);
(107) change the device identification code;
(108) the ticket transaction device 100 provides the result of the transaction through the indicating unit 104.
(109) the ticket transaction device 100 exchanges the result of the ticket verification with the ticket electrical carrier 200;
(110) interrupt the wireless communication connection with the ticket electrical carrier 200 and return to the step (101);
(202) acquire the device identification code corresponded to the new geographic location, process the step (203);
(203) confirm whether there is necessary to change the device identification code. If so, continue the step (204); otherwise, return to the step (101);
(204) change the device identification code, and return to the step (101).

In conclusion, the smart ticket automatically matching system of the present invention truly has unprecedented characteristics of innovation, and is not seen in any publications and does not have any other similar products on the market; therefore, the present invention possess novelty undoubtedly. Besides, the conventional technology is not comparable with the unique characteristic and function of the present invention, so the present invention possesses novelty compared with conventional technology. The present invention conforms with the condition of application for a patent of invention patent law in our country, and the applicant applies for a patent in accordance with the law.

With the examples and explanations mentioned above, the features and spirits of the invention are hopefully well described. More importantly, the present invention is not limited to the embodiment described herein. Those skilled in the art will readily observe that numerous modifications and alterations of the device may be made while retaining the teachings of the invention. Accordingly, the above disclosure should be construed as limited only by the metes and bounds of the appended claims.

## Claims

1. A smart ticket automatically matching system, comprising:
a ticket electrical carrier, a ticket data unit, and a ticket transaction device;
wherein the ticket electrical carrier comprises:
a wireless device, having functions of communicating with other wireless communication devices; and
a processor unit, capable of processing the information content exchanged through the wireless device;
wherein the ticket data unit is a storing unit for storing unit stores the data of electrical tickets;
wherein the ticket transaction device comprises:
a wireless device, having functions of communicating with other wireless communication devices;
a processor unit, capable of processing the information content exchanged through the wireless device;
a ticket transaction device identification code, for labeling the types of the electrical tickets that can be used on the ticket transaction device;
wherein the ticket transaction device and the ticket electrical carrier establish wireless communication through their wireless devices;
wherein the ticket transaction device delivers the ticket transaction device identification code through the wireless device of the ticket transaction device, and the ticket electrical carrier receives the ticket transaction device identification code through the wireless device of the ticket electrical carrier, the ticket electrical carrier takes the ticket transaction device identification code as a filter criteria to process the comparison with the data of the electrical tickets stored in the ticket data unit to confirm whether the ticket electrical carrier has any allowable electrical ticket on the ticket transaction device among the electrical tickets.

2. The smart ticket automatically matching system of claim 1, wherein the ticket electrical carrier is set to automatically deliver the allowable electrical ticket to the ticket transaction device through the wireless device after confirming the allowable electrical ticket in the ticket electrical carrier.

3. The smart ticket automatically matching system of claim 1, wherein the ticket electrical carrier is set to be determined by a user whether to deliver the allowable electrical ticket to the ticket transaction device or not after confirming the allowable electrical ticket in the ticket electrical carrier.

4. The smart ticket automatically matching system of claims 2 or 3, wherein the ticket electrical carrier further comprises an indicating unit; wherein the indicating unit informs the user of whether there is an allowable electrical ticket or not, the kinds and quantity of the allowable electrical tickets, or the instruction or inquiring information of a decision-making procedure for a user to decide whether to deliver the electrical ticket to the ticket transaction device through at least one instructing way of visual sense, auditory sense, or vibro-tactile sense.

5. The smart ticket automatically matching system of claims 2 or 3, wherein the ticket transaction device further comprises an indicating unit; wherein the indicating unit informs the user of the kinds and quantity of the allowable electrical tickets, or the instruction or inquiring information of a decision-making procedure for a user to decide whether to deliver the electrical ticket to the ticket transaction device through at least one instructing way of visual sense, auditory sense, or vibro-tactile sense.

6. The smart ticket automatically matching system of claims 2 or 3, wherein the ticket electrical carrier further comprises an internet connection unit for providing an internet connecting function.

7. The smart ticket automatically matching system of claim 4, wherein the ticket electrical carrier further comprises an input unit for the user to input the kinds and quantity of the electrical tickets that the user decides to use, or to input whether to start the process of delivering the electrical tickets according to the information provided by the indicating unit.

8. The smart ticket automatically matching system of claim 5, wherein the ticket transaction device further comprises an input unit, for the user to input the kinds and quantity of the electrical tickets that the user decides to use, or to input whether to start the process of delivering the electrical tickets according to the information provided by the indicating unit.

9. The smart ticket automatically matching system of claims 2 or 3, wherein the ticket transaction device further comprises an internet connecting unit for providing an internet connecting function.

10. The smart ticket automatically matching system of claims 2 or 3, wherein the ticket transaction device dynamically changes the ticket transaction device identification code according to at least one of the following factors: whether the specific ticket is delivered or not, the transaction sequence of the plurality of the specific tickets, current time, and time difference.

11. The smart ticket automatically matching system of claims 2 or 3, wherein the ticket transaction device is further configured with a geographic location information unit, the ticket transaction device is capable of acquiring a geographic location through the geographic location information unit, and the ticket transaction device dynamically changes the ticket transaction device identification code according to at least one of the following factors: whether the specific ticket is delivered or not, the transaction sequence of the plurality of the specific tickets, current time, time interval, or/and geographic location.

12. The smart ticket automatically matching system of claims 2 or 3, further comprising a remote control unit, wherein the remote control unit communicates with the ticket transaction device through wireless communication and changes the ticket transaction device identification code through the command.

13. The smart ticket automatically matching system of claim 9, further comprising a remote control unit, wherein the remote control unit communicates with the internet connection unit through the internet connection of the ticket transaction device and changes the ticket transaction device identification code through the command.

14. The smart ticket automatically matching system of claims 1, 2 or 3, wherein the ticket electrical carrier is a mobile phone, an electronic outfit device, or a tablet computer.

15. The smart ticket automatically matching system of claims 1, 2 or 3, wherein the transmission technology of wireless communication used by the wireless devices of ticket electrical carrier, and the ticket transaction device is WiFi, Bluetooth, Zigbee communication standard, or other kinds of wireless communication standard.
